(19) Europäisches Patentamt
European Patent Office
Office européen des brevets

(11) **EP 3 849 823 B1**

(12) # FASCICULE DE BREVET EUROPEEN

(45) Date de publication et mention de la délivrance du brevet:
**01.11.2023 Bulletin 2023/44**

(21) Numéro de dépôt: **19786648.6**

(22) Date de dépôt: **11.09.2019**

(51) Classification Internationale des Brevets (IPC):
***C08L 23/08*** *(2006.01)* ***C08K 5/50*** *(2006.01)*
***C08K 5/44*** *(2006.01)* ***C08K 3/04*** *(2006.01)*
***C08K 3/06*** *(2006.01)* ***B60C 1/00*** *(2006.01)*
***C08K 5/40*** *(2006.01)*

(52) Classification Coopérative des Brevets (CPC):
(C-Sets disponibles)
**C08K 5/44; B60C 1/0016; C08K 3/04; C08K 3/06; C08K 5/40** (Cont.)

(86) Numéro de dépôt international:
**PCT/FR2019/052098**

(87) Numéro de publication internationale:
**WO 2020/053521 (19.03.2020 Gazette 2020/12)**

(54) **COMPOSITION DE CAOUTCHOUC**

KAUTSCHUKZUSAMMENTSETZUNG

RUBBER COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.09.2018 FR 1858136**

(43) Date de publication de la demande:
**21.07.2021 Bulletin 2021/29**

(73) Titulaire: **COMPAGNIE GENERALE DES ETABLISSEMENTS MICHELIN**
**63000 Clermont-Ferrand (FR)**

(72) Inventeurs:
- **ARAUJO DA SILVA, José-Carlos**
**63040 CLERMONT-FERRAND Cedex 9 (FR)**
- **LEMERLE, Frédéric**
**63040 CLERMONT-FERRAND Cedex 9 (FR)**
- **TRIGUEL, Aurélie**
**63040 CLERMONT-FERRAND Cedex 9 (FR)**

(74) Mandataire: **Gandon-Pain, Sylvie**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**WO-A1-2014/114607**
**WO-A1-2016/012259**
**FR-A1- 3 032 710**
**FR-A1- 3 058 147**
**US-A1- 2013 324 660**
**US-A1- 2018 187 747**
**US-B2- 9 846 954**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

**(Cont. page suivante)**

(52) Classification Coopérative des Brevets (CPC):
(Cont.)

C-Sets
**C08K 3/04, C08L 23/083;**
**C08K 3/06, C08L 23/083;**
**C08K 5/40, C08L 23/083;**
**C08K 5/44, C08L 23/083**

## Description

Le domaine de la présente invention est celui des compositions de caoutchouc à base d'élastomère diénique fortement saturé destinées à être utilisées dans un pneumatique, notamment dans sa bande de roulement.

Pour un même élastomère, le niveau de rigidité d'une composition de caoutchouc est défini par le degré de vulcanisation de l'élastomère qui dépend à la fois de la cinétique de vulcanisation et du temps de séjour de la composition de caoutchouc dans la presse de cuisson. Il est connu que les compositions de caoutchouc continuent à cuire, même une fois sorties des presses de cuisson. La poursuite de la cuisson en dehors des presses est d'autant plus importante que la composition de caoutchouc se présente sous la forme d'un objet massif. Si la rigidification de la composition de caoutchouc n'est pas suffisante à la sortie de la presse, la viscosité de la composition de caoutchouc permet alors la formation de bulle au sein de la composition de caoutchouc quand la cuisson se poursuit en dehors de la presse. La formation de bulle au sein de la composition de caoutchouc représente des défauts d'homogénéité dans la composition de caoutchouc et peut entraîner une diminution de l'endurance du pneumatique contenant la composition de caoutchouc. Il est donc souhaitable qu'en fin de cuisson dans la presse la composition de caoutchouc ait atteint une rigidité suffisante pour empêcher la formation de bulles.

Les élastomères diéniques fortement saturés qui contiennent au moins 50% en mole d'unité éthylène ont l'inconvénient de vulcaniser selon une cinétique plus lente que les élastomères diéniques fortement insaturés qui contiennent plus de 50% en moles d'unités diéniques. Des temps de séjour plus longs dans les presses de cuisson sont donc nécessaires pour vulcaniser les compositions de caoutchouc contenant les élastomères diéniques fortement saturés, surtout si l'on souhaite éviter les phénomènes de bullage évoqués précédemment. La moindre réactivité des élastomères diéniques fortement saturés vis-à-vis de la vulcanisation se traduit donc par un temps d'occupation des presses plus long par composition de caoutchouc et donc des cycles de production plus longs, ce qui a pour effet de diminuer la productivité des sites de fabrication de pneumatique.

Par ailleurs, il est également important de disposer de compositions de caoutchouc qui présentent une bonne cohésion. Par exemple, au cours du roulage, une bande de roulement subit des sollicitations mécaniques et des agressions résultant du contact direct avec le sol. Ceci a pour conséquence que des amorces de fissures se créent. Au cours de leur propagation en surface ou à l'intérieur de la bande de roulement, les amorces de fissure peuvent entraîner la rupture du matériau qui constitue la bande de roulement. Cet endommagement de la bande de roulement réduit la durée de vie de la bande de roulement du pneumatique. Les sollicitations mécaniques et les agressions subies par le pneumatique étant amplifiées sous l'effet du poids porté par le pneumatique, une bonne cohésion est tout particulièrement recherchée dans le cas d'un pneumatique monté sur un véhicule portant de lourdes charges. US 9 846 954 B2 concerne la cohésion de pneus. Les compositions de bande de roulement comprennent un grand taux de charges et de plastifiant et un système de vulcanisation efficace afin de préserver la cohésion du matériau.Les élastomères décrits sont fortement insaturés. Les propriétés à la rupture ne sont pas mentionnées. WO 2014/114607 A1 décrit des compositions de caoutchouc pour pneu à base de noir de carbone et d' élastomère diénique fortement saturé , lequel est un copolymère d'éthylène et de butadiène contenant des unités éthylène qui représentent au moins 50% en mole des unités monomères du copolymère. Deux accélérateurs sont présents (CBS (N-cyclohexyl-2-benzothiazyle sulfénamide) et hexaméthylène tétraamine (comme accélérateur secondaire).

Il existe toujours une préoccupation de disposer de compositions de caoutchouc avec un compromis amélioré entre les propriétés de cohésion et les temps de cuisson sous presse.

La Demanderesse a trouvé une composition de caoutchouc qui permet de répondre à cette préoccupation.

Ainsi, un premier objet de l'invention est une composition de caoutchouc à base au moins d'un élastomère diénique fortement saturé, d'un noir de carbone et d'un système de vulcanisation comprenant du soufre et un accélérateur de vulcanisation,

- l'élastomère diénique fortement saturé étant un copolymère d'éthylène et d'un 1,3-diène contenant des unités éthylène qui représentent au moins 50% en mole des unités monomères du copolymère,
- le taux de l'élastomère diénique fortement saturé dans la composition de caoutchouc étant d'au moins 50 pce,
- l'accélérateur de vulcanisation étant un mélange d'un accélérateur primaire et d'un accélérateur secondaire,
- le ratio massique entre la quantité de l'accélérateur secondaire et la quantité totale d'accélérateurs est inférieur à 0.7, la quantité totale d'accélérateurs étant la somme de la quantité massique de l'accélérateur primaire et de la quantité massique de l'accélérateur secondaire dans la composition de caoutchouc,
- le ratio massique étant calculé à partir des quantités exprimées en pce
- l'accélérateur primaire étant une sulfénamide,
- l'accélérateur secondaire étant un disulfure de thiurame.

Un autre objet de l'invention est un pneumatique qui comprend une composition de caoutchouc conforme à l'invention.

## 1. DESCRIPTION DETAILLEE DE L'INVENTION

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b). L'abréviation "pce" signifie parties en poids pour cent parties d'élastomère (du total des élastomères si plusieurs élastomères sont présents).

Dans la présente demande, les rapports massiques et les ratios massiques entre divers constituants de la composition de caoutchouc sont calculés à partir des taux ou quantités des constituants exprimés en pce.

Par l'expression composition "à base de", il faut entendre dans la présente description une composition comportant le mélange et/ou le produit de réaction in situ des différents constituants utilisés, certains de ces constituants de base (par exemple l'élastomère, la charge ou les constituants du système de vulcanisation ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

Dans la présente demande, on entend par « l'ensemble des unités monomères de l'élastomère » ou « la totalité des unités monomères de l'élastomère » tous les motifs de répétitions constitutifs de l'élastomère qui résultent de l'insertion des monomères dans la chaîne élastomère par polymérisation. Sauf indication contraire, les teneurs en une unité monomère ou motif de répétition dans l'élastomère diénique fortement saturé sont données en pourcentage molaire calculé sur la base de l'ensemble des unités monomères de l'élastomère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les élastomères, les plastifiants, les charges ...

L'élastomère utile aux besoins de l'invention est un élastomère diénique fortement saturé, de préférence statistique, qui comprend des unités éthylène résultant de la polymérisation d'éthylène. De manière connue, l'expression « unité éthylène » fait référence au motif $-(CH_2-CH_2)-$ résultant de l'insertion de l'éthylène dans la chaîne élastomère. L'élastomère diénique fortement saturé est riche en unité éthylène, puisque les unités éthylène représentent au moins 50% en mole de l'ensemble des unités monomères de l'élastomère.

De préférence, l'élastomère diénique fortement saturé comprend au moins 65% molaire d'unité éthylène. Autrement dit, les unités éthylène représentent préférentiellement au moins 65% en mole de l'ensemble des unités monomères de l'élastomère diénique fortement saturé. De manière plus préférentielle, l'élastomère diénique fortement saturé comprend de 65% à 90% molaire d'unité éthylène, pourcentage molaire calculé sur la base de l'ensemble des unités monomères de l'élastomère diénique fortement saturé.

L'élastomère diénique fortement saturé étant un copolymère d'éthylène et d'un 1,3-diène comprend aussi des unités 1,3-diène résultant de la polymérisation d'un 1,3-diène. De manière connue, l'expression « unité 1,3-diène » fait référence aux unités résultant de l'insertion du 1,3-diène par une addition 1,4, une addition 1,2 ou une addition 3,4 dans le cas de l'isoprène. Les unités 1,3-diène sont celles par exemple d'un 1,3-diène ayant 4 à 12 atomes de carbone, tels que le 1,3-butadiène, l'isoprène, le 1,3-pentadiène, un aryl-1,3-butadiène. De préférence, le 1,3-diène est le 1,3-butadiène, auquel cas l'élastomère diénique fortement saturé est un copolymère d'éthylène et de 1,3-butadiène, de préférence statistique.

L'élastomère diénique fortement saturé utile aux besoins de l'invention, peut être obtenu selon différentes méthodes de synthèses connues de l'homme du métier, notamment en fonction de la microstructure visée de l'élastomère diénique fortement saturé. Généralement, il peut être préparé par copolymérisation au moins d'un 1,3-diène, de préférence le 1,3-butadiène, et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques sont décrits dans les documents EP 1092 731, WO 2004035639, WO 2007054223 et WO 2007054224 au nom de la Demanderesse. L'élastomère diénique fortement saturé, y compris lorsqu'il est statistique, peut être préparé aussi par un procédé utilisant un système catalytique de type préformé comme ceux décrits dans les documents WO 2017093654 A1, WO 2018020122 A1 et WO 2018020123 A1.

L'élastomère diénique fortement saturé dans la composition de caoutchouc telle que définie à l'une quelconque des revendications 1 à 14 contient de préférence des unités de formule (I) ou des unités de formule (II).

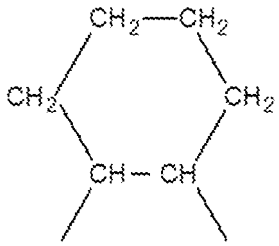

(I)

$$-CH_2-CH(CH=CH_2)- \quad (II)$$

La présence de motif cyclique saturé à 6 membres, 1,2-cyclohexanediyle, de formule (I) dans le copolymère peut résulter d'une série d'insertions très particulières de l'éthylène et du 1,3-butadiène dans la chaîne polymère au cours de sa croissance. Lorsque l'élastomère diénique fortement saturé comprend des unités de formule (I) ou des unités de formule (II), les pourcentages molaires des unités de formule (I) et des unités de formule (II) dans l'élastomère diénique fortement saturé, respectivement o et p, satisfont de préférence à l'équation suivante (eq. 1), de manière plus préférentielle à l'équation (eq. 2), o et p étant calculés sur la base de l'ensemble des unités monomères de l'élastomère diénique fortement saturé.

$$0 < o+p \leq 25 \quad \text{(eq. 1)}$$

$$0 < o+p < 20 \quad \text{(eq. 2)}$$

L'élastomère diénique fortement saturé utile aux besoins de l'invention peut être constitué d'un mélange d'élastomères diéniques fortement saturés qui se différencient les uns des autres par leurs microstructures ou par leurs macrostructures.

Selon l'invention, le taux de l'élastomère diénique fortement saturé dans la composition de caoutchouc est d'au moins 50 parties en poids pour cent parties d'élastomère de la composition de caoutchouc (pce). De préférence, le taux de l'élastomère diénique fortement saturé dans la composition de caoutchouc varie dans un domaine allant de 80 à 100 pce. De manière plus préférentielle, il varie dans un domaine allant de 90 à 100 pce.

Le système de vulcanisation utile aux besoins de l'invention a pour caractéristique essentielle de comprendre du soufre et un accélérateur de vulcanisation. Par définition, le taux de soufre et le taux de l'accélérateur de vulcanisation dans le système de vulcanisation sont tous les deux strictement supérieurs à 0 pce. Avantageusement, le taux de soufre dans la composition de caoutchouc définie à l'une quelconque des revendications 1 à 15 est supérieur à 0.3 pce. Avantageusement, la quantité de l'accélérateur de vulcanisation, c'est à dire la somme de la quantité d'accélérateur primaire et de la quantité d'accélérateur secondaire, dans la composition de caoutchouc définie à l'une quelconque des revendications 1 à 15 est d'au moins 0.5 pce.

Le soufre est typiquement apporté sous forme de soufre moléculaire ou d'un agent donneur de soufre, de préférence sous forme moléculaire. Le soufre sous forme moléculaire est aussi désigné sous l'appellation de soufre moléculaire. On entend par donneur de soufre tout composé qui libère des atomes de soufre, combinés ou pas sous la forme d'une chaîne polysulfure, aptes à s'insérer dans les chaînes polysulfures formés au cours de la vulcanisation et pontant les chaînes élastomères. Le taux de soufre dans la composition de caoutchouc est préférentiellement inférieur à 1 pce, de préférence compris entre 0.3 et 1 pce.

Selon un mode de réalisation plus préférentiel de l'invention, le taux de soufre dans la composition de caoutchouc est inférieur à 0.95 pce, de préférence compris entre 0.3 pce et 0.95 pce.

Selon un mode de réalisation encore plus préférentiel de l'invention, le taux de soufre dans la composition de caoutchouc est inférieur à 0.8 pce, de préférence compris entre 0.3 pce et 0.8 pce.

L'accélérateur de vulcanisation est un mélange d'un accélérateur primaire et d'un accélérateur secondaire. La dénomination « un accélérateur primaire » désigne un seul accélérateur primaire ou un mélange d'accélérateurs primaires. De façon analogue, la dénomination « un accélérateur secondaire » désigne un seul accélérateur secondaire ou un mélange d'accélérateurs secondaires. L'accélérateur primaire, qu'il soit sous la forme de mélange ou non, et l'accélérateur secondaire, qu'il soit sous la forme de mélange ou non, constituent donc les seuls accélérateurs de la composition de caoutchouc. Par définition, les taux d'accélérateur primaire et d'accélérateur secondaire dans le système de vulcanisation sont tous les deux strictement supérieurs à 0 pce.

On peut utiliser comme accélérateur de vulcanisation (primaire ou secondaire) tout composé susceptible d'agir comme accélérateur de vulcanisation des élastomères diéniques en présence de soufre, notamment des accélérateurs

du type thiazoles ainsi que leurs dérivés, des accélérateurs de types sulfénamides pour ce qui est des accélérateurs primaires, du type thiurames, dithiocarbamates, dithiophosphates, thiourées et xanthates pour ce qui est des accélérateurs secondaires.

L'accélérateur primaire est une sulfénamide. L'accélérateur secondaire est un disulfure de thiurame.

A titre d'exemples d'accélérateurs primaires, on peut citer les composés tels que la N-cyclohexyl-2-benzothiazyle sulfénamide ("CBS"), la N,N-dicyclohexyl-2-benzothiazyle sulfénamide ("DCBS"), la N-ter-butyl-2-benzothiazyle sulfénamide ("TBBS"), et les mélanges de ces composés. L'accélérateur primaire est une sulfénamide, plus préférentiellement la N-cyclohexyl-2-benzothiazyle sulfénamide.

A titre d'exemple d'accélérateurs secondaires, on peut citer les composés tels que le disulfure de tétraéthylthiurame, le disulfure de tétrabutylthiurame ("TBTD"), le disulfure de tétrabenzylthiurame ("TBZTD") et les mélanges de ces composés. L'accélérateur secondaire est un disulfure de thiurame, plus préférentiellement le disulfure de tétrabenzylthiurame.

L'accélérateur de vulcanisation est un mélange d'une sulfénamide et d'un disulfure de thiurame. L'accélérateur de vulcanisation est avantageusement un mélange de N-cyclohexyl-2-benzothiazyle sulfénamide et d'un disulfure de thiurame, plus avantageusement un mélange de N-cyclohexyl-2-benzothiazyle sulfénamide et de disulfure de tétrabenzylthiurame.

Selon l'invention, le ratio massique entre la quantité de l'accélérateur secondaire et la quantité totale d'accélérateurs est inférieur à 0.7, la quantité totale d'accélérateurs étant la somme de la quantité massique de l'accélérateur primaire et de la quantité massique de l'accélérateur secondaire dans la composition de caoutchouc. Autrement dit, le taux massique ou quantité massique de l'accélérateur secondaire représente moins de 70% en masse de la quantité totale d'accélérateurs. De préférence, le ratio massique entre la quantité de l'accélérateur secondaire et la quantité totale d'accélérateurs est supérieur à 0.05, plus particulièrement compris entre 0.05 et 0.7.

De préférence, le ratio massique entre la quantité de l'accélérateur secondaire et la quantité totale d'accélérateurs est préférentiellement inférieur à 0.5, encore plus préférentiellement inférieur ou égale à 0.3. Ces plages préférentielles permettent d'optimiser encore davantage le compromis entre les propriétés de cohésion et les temps de cuisson sous presse en diminuant très fortement la durée sous presse tout en maintenant de bonnes propriétés limite, même en la présence d'une amorce de fissure dans la composition de caoutchouc.

Selon un mode de réalisation préférentiel, le rapport massique entre le taux de soufre et la quantité totale d'accélérateurs dans la composition de caoutchouc est inférieur à 1, de préférence inférieur ou égal à 0.7, de manière plus préférentielle inférieur à 0.6. L'utilisation de tels rapports permettent d'obtenir des compositions avec des propriétés de cohésion davantage améliorées.

Selon un mode de réalisation particulièrement préférentiel de l'invention, le taux de soufre dans la composition de caoutchouc est inférieur à 1 pce et le rapport massique entre le taux de soufre et la quantité totale d'accélérateurs dans la composition de caoutchouc est inférieur à 1. Cette double condition portant sur le taux de soufre et sur le rapport massique entre le taux de soufre et la quantité totale d'accélérateurs permettent d'obtenir des compositions avec une cohésion encore plus forte. Les propriétés de cohésion sont d'autant plus améliorées que le taux de soufre et le rapport massique entre le taux de soufre et la quantité totale d'accélérateurs sont faibles et sont notamment dans les plages préférentielles mentionnées dans les revendications 7 et 8 pour le taux de soufre et la revendication 10 pour le rapport massique entre le taux de soufre et la quantité totale d'accélérateurs.

De manière bien connue, le système de vulcanisation peut comprendre aussi des activateurs de vulcanisation comme des oxydes métalliques tels que l'oxyde de zinc ou des acides gras tels que l'acide stéarique.

Selon l'invention, la composition de caoutchouc comprend un noir de carbone à titre de charge renforçante. Une charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Lorsque la composition de caoutchouc conforme à l'invention est utilisée dans une bande de roulement, le noir de carbone est préférentiellement un noir de carbone des séries 100 ou 200.

Le taux de noir de carbone peut varier dans une large mesure et est ajusté par l'homme du métier selon l'application envisagée de la composition de caoutchouc, en particulier dans le domaine du pneumatique. Pour une application de la composition de caoutchouc dans une bande de roulement, en particulier pour véhicules destinés à porter de lourdes de charges, le taux de noir de carbone dans la composition de caoutchouc est compris préférentiellement entre 25 pce et 65 pce. Pour une telle application dans le domaine des véhicules poids lourds, la composition de caoutchouc peut présenter un niveau de renforcement insuffisant au-dessous de 25 pce et peut présenter une hystérèse excessive au-dessus de 65 pce.

La composition de caoutchouc utile aux besoins de l'invention peut comporter également tout ou partie des additifs usuels habituellement utilisés dans les compositions d'élastomères destinées à être utilisées dans un pneumatique, comme par exemple dans une bande de roulement pour pneumatique. De tels additifs sont par exemple des charges telles que silices, alumines, des agents de mise en oeuvre, des plastifiants, des pigments, des agents de protection tels que cires anti-ozone, anti-ozonants chimiques, anti-oxydants.

La composition de caoutchouc peut être fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 40°C et 100°C, phase de finition au cours de laquelle est incorporé le soufre ou le donneur de soufre et l'accélérateur de vulcanisation.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en oeuvre complémentaires et autres additifs divers, à l'exception du soufre et des accélérateurs de vulcanisation. La durée totale du malaxage, dans cette phase non-productive, est de préférence comprise entre 1 et 15 min. Après refroidissement du mélange ainsi obtenu au cours de la première phase non-productive, on incorpore alors le soufre et l'accélérateur de vulcanisation à basse température, généralement dans un mélangeur externe tel qu'un mélangeur à cylindres; le tout est alors mélangé (phase productive) pendant quelques minutes, par exemple entre 2 et 15 min.

La composition de caoutchouc peut être calandrée ou extrudée, de préférence pour former tout ou partie d'un profil d'une bande de roulement d'un pneumatique.

Le pneumatique, autre objet de l'invention, qui comprend une composition de caoutchouc conforme à l'invention, comprend de préférence la composition de caoutchouc dans sa bande de roulement. En particulier sa bande de roulement dont la portion destinée à être au contact avec le sol de roulage est constituée tout ou partie d'une composition de caoutchouc conforme à l'invention. Le pneumatique peut être à l'état cru (c'est à dire avant l'étape de cuisson du pneumatique) ou à l'état cuit (c'est-à-dire après l'étape de cuisson du pneumatique). Le pneumatique est préférentiellement un pneumatique pour véhicule destiné à porter de lourdes charges comme par exemple les véhicules poids lourd, les véhicules de génie civil.

Les caractéristiques précitées de la présente invention, ainsi que d'autres, seront mieux comprises à la lecture de la description suivante de plusieurs exemples de réalisation de l'invention, donnés à titre illustratif et non limitatif.

## II. EXEMPLES DE REALISATION DE L'INVENTION

### II.1 Tests et mesures :

#### II.1-1 Détermination de la microstructure des élastomères :

La microstructure des élastomères est déterminée par analyse RMN $^{1}H$, suppléée par l'analyse RMN $^{13}C$ lorsque la résolution des spectres RMN du $^{1}H$ ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone.

Pour les élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz.

Pour les mesures sur des élastomères solubles, est utilisée une sonde RMN liquide permettant d'observer le proton et le carbone en mode découplé du proton.

La préparation des échantillons non solubles est faite dans des rotors remplis avec le matériau analysé et un solvant deutéré permettant le gonflement, en général du chloroforme deutéré (CDCl3). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante.

Les échantillons solubles sont mis en solution dans un solvant deutéré (environ 25mg d'élastomère dans 1mL), en général du chloroforme deutéré (CDCl3). Le solvant ou coupage de solvant utilisé doit toujours être deutéré et sa nature chimique peut être adaptée par l'homme du métier.

Dans les deux cas (échantillon soluble ou échantillon gonflé):
Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque

impulsion est adapté pour obtenir une mesure quantitative.

Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Les mesures de RMN sont réalisées à 25°C.

11.1-2 Résistance mécanique en présence d'amorces de fissure (déchirabilité) :

La force et la déformation de déchirabilité sont mesurées sur une éprouvette étirée à 500 mm/min pour provoquer la rupture de l'éprouvette. L'éprouvette de traction est constituée par une plaque de caoutchouc de forme parallélépipédique, par exemple d'épaisseur comprise entre 1 et 2 mm, de longueur entre 130 et 170 mm et de largeur entre 10 et 15 mm, les deux bords latéraux étant chacun recouvert dans le sens de la longueur d'un bourrelet de caoutchouc cylindrique (diamètre 5 mm) permettant l'ancrage dans les mors de la machine de traction. 3 entailles très fines de longueur comprise entre 15 et 20 mm sont réalisées à l'aide d'une lame de rasoir, à mi-largeur et alignées dans le sens de la longueur de l'éprouvette, une à chaque extrémité et une au centre de l'éprouvette, avant le démarrage du test. On détermine la force (N/mm) à exercer pour obtenir la rupture et on mesure l'allongement à la rupture. Le test a été conduit à l'air, à une température de 100°C. Des valeurs élevées traduisent une bonne cohésion de la composition de caoutchouc bien que présentant des amorces de fissure.

11.1-3 Essais de traction :

Les essais d'allongement rupture (AR%) et de contrainte rupture (CR) sont basées sur la norme NF ISO 37 de Décembre 2005 sur une éprouvette haltère de type H2 et sont mesurés à une vitesse de traction de 500 mm/min. L'allongement rupture est exprimé en % d'allongement. La contrainte rupture est exprimée en MPa. Toutes ces mesures de traction sont effectuées à 60°C.

11.1-4 Propriétés de cuisson :

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction vulcanisation. Les mesures sont traitées selon la norme DIN 53529 - partie 2 (mars 1983). Ti est le délai d'induction, c'est-à-dire le temps nécessaire au début de la réaction de vulcanisation. T95 est le temps nécessaire pour atteindre une conversion de 95%, c'est-à-dire 95% de l'écart entre les couples minimum et maximum. On mesure également la constante de vitesse de conversion notée K (exprimée en $min^{-1}$ ), d'ordre 1, calculée entre 30% et 80% de conversion, qui permet d'apprécier la cinétique de vulcanisation.

**11.2 Préparation des compositions de caoutchouc :**

Les compositions de caoutchouc dont le détail de la formulation figure dans le tableau 1, ont été préparées de la manière suivante :

On introduit dans un mélangeur interne (taux de remplissage final : environ 70% en volume), dont la température initiale de cuve est d'environ 80°C, successivement l'élastomère, la charge renforçante ainsi que les divers autres ingrédients à l'exception du soufre et de l'accélérateur de vulcanisation. On conduit alors un travail thermomécanique (phase non-productive) en une étape, qui dure au total environ 3 à 4 min, jusqu'à atteindre une température maximale de « tombée » de 165°C. On récupère le mélange ainsi obtenu, on le refroidit puis on incorpore le soufre et l'accélérateur de vulcanisation sur un mélangeur (homo-finisseur) à 30 °C, en mélangeant le tout (phase productive) pendant un temps approprié (par exemple une dizaine de minutes).

Les compositions ainsi obtenues sont ensuite calandrées soit sous la forme de plaques (épaisseur 2 à 3mm) ou de feuilles fines de caoutchouc pour la mesure de leur propriétés physiques ou mécaniques, soit extrudées sous la forme d'une bande de roulement pour pneumatique.

L'élastomère (EBR) est préparé selon le mode opératoire suivant :

30 mg de métallocène $[\{Me_2SiFlu_2Nd(\mu\text{-}BH_4)_2Li(THF)\}_2$, le symbole Flu représentant le groupe fluorényle de formule $C_{13}H_8]$ sont introduits dans une première bouteille Steinie en boite à gant. Le co-catalyseur, le butyloctylmagnésium mis au préalable en solution dans 300 ml de méthylcyclohexane dans une seconde bouteille Steinie, est introduit dans la première bouteille Steinie contenant le métallocène dans les proportions suivantes 0.00007 mol/L de métallocène, 0.0004 mol/L de co-catalyseur. Après 10 minutes de contact à température ambiante est obtenue une solution catalytique.

La solution catalytique est ensuite introduite dans le réacteur de polymérisation. La température dans le réacteur est alors augmentée à 80°C. Lorsque cette température est atteinte, la réaction démarre par injection d'un mélange gazeux d'éthylène et de 1,3-butadiène (80/20 % molaire) dans le réacteur. La réaction de polymérisation se déroule à une pression de 8 bars. Les proportions de métallocène et de co-catalyseur sont respectivement de 0.00007 mol/L et 0.0004 mol/L. La réaction de polymérisation est stoppée par refroidissement, dégazage du réacteur et ajout d'éthanol. Un anti-oxydant est ajouté à la solution de polymère. Le copolymère est récupéré par séchage en étuve sous vide.

Les compositions de caoutchouc C5 à C11 sont conformes à l'invention. Les compositions de caoutchouc C12 et C13 ne sont pas conformes à l'invention, le ratio entre la quantité massique d'accélérateur secondaire et la somme de la quantité massique d'accélérateur primaire et de la quantité massique d'accélérateur secondaire n'étant pas inférieur à 0.7. Les compositions C1 à C4 qui ne contiennent pas d'accélérateur secondaire ne sont pas conformes à l'invention.

**II.3 Résultats** :

Les résultats figurent dans le tableau 2.

Les résultats montrent que les compositions de caoutchouc C5 à C11 sont celles qui présentent le meilleur compromis entre les propriétés de cohésion et le temps de cuisson sous presse. Parmi ces compositions conformes à l'invention, les compositions C5 à C10 s'avèrent parmi les plus avantageuses tant du point de vue des propriétés de cohésion que des temps de cuisson sous presse. La composition C13, non conforme, dans laquelle l'accélérateur secondaire est le seul accélérateur dans la composition de caoutchouc permet de réduire le temps de cuisson sous presse, mais ce résultat est obtenu au détriment des propriétés de cohésion. La composition C12, non conforme, dans laquelle l'accélérateur secondaire représente plus de 70% en masse d'accélérateur utilisé permet également de réduire le temps de cuisson sous presse, mais ce résultat est également obtenu au détriment des propriétés de cohésion.

Quant aux compositions C1 à C4, non conformes, elles présentent de bonnes propriétés de cohésion, mais ces résultats sont obtenus au détriment des propriétés de cuisson d'un point de vue de la productivité, puisque les temps de cuisson sous presse sont bien plus élevés.

Tableau 1

| **Composition** | C1 | C2 | C3 | C4 | C5 | C6 | C7 | C8 | C9 | C10 | C11 | C12 | C13 |
|---|---|---|---|---|---|---|---|---|---|---|---|---|---|
| EBR (1) | 100 | 100 | 100 | 100 | 100 | 100 | 100 | 100 | 100 | 100 | 100 | 100 | 100 |
| Noir de carbone (2) | 40 | 40 | 40 | 40 | 40 | 40 | 40 | 40 | 40 | 40 | 40 | 40 | 40 |
| Antioxydant (3) | 2 | 2 | 2 | 2 | 2 | 2 | 2 | 2 | 2 | 2 | 2 | 2 | 2 |
| Cire anti-ozone | 1 | 1 | 1 | 1 | 1 | 1 | 1 | 1 | 1 | 1 | 1 | 1 | 1 |
| Acide stéarique | 1.5 | 1.5 | 1.5 | 1.5 | 1.5 | 1.5 | 1.5 | 1.5 | 1.5 | 1.5 | 1.5 | 1.5 | 1.5 |
| ZnO | 2.5 | 2.5 | 2.5 | 2.5 | 2.5 | 2.5 | 2.5 | 2.5 | 2.5 | 2.5 | 2.5 | 2.5 | 2.5 |
| Accélérateur 1 (4) | 1.2 | 0.8 | 1.1 | 1.43 | 1.13 | 1.07 | 1.01 | 0.95 | 0.96 | 0.96 | 0.66 | 0.36 | - |
| Accélérateur 2 (5) | - | - | - | - | 0.13 | 0.19 | 0.25 | 0.31 | 0.10 | 0.15 | 0.6 | 0.9 | 1.26 |
| Total accélérateurs (6) | 1.2 | 0.8 | 1.1 | 1.43 | 1.26 | 1.26 | 1.26 | 1.26 | 1.06 | 1.11 | 1.26 | 1.26 | 1.26 |
| Ratio (7) | 0 | 0 | 0 | 0 | 0.1 | 0.15 | 0.2 | 0.25 | 0.09 | 0.14 | 0.48 | 0.71 | 1 |
| Soufre | 0.5 | 1.5 | 1.1 | 0.94 | 0.56 | 0.56 | 0.56 | 0.56 | 0.70 | 0.45 | 0.56 | 0.56 | 0.56 |
| Soufre/Accélérateurs | 0.4 | 1.8 | 1 | 0.66 | 0.44 | 0.44 | 0.44 | 0.44 | 0.66 | 0.41 | 0.44 | 0.44 | 0.44 |

(1) Elastomère à 79% en mole d'unité éthylène, 7% en mole d'unité 1,2-cyclohexanediyle, 8% en mole de motif 1,2 de la partie butadiénique, 6% en mole de motif 1,4 de la partie butadiénique
(2) N234
(3) N-(1,3-diméthylbutyl)-N'-phényl-p-phenylènediamine ("Santoflex 6-PPD" société Flexsys)
(4) N-cyclohexyl-2-benzothiazol-sulfénamide (« Santocure CBS » de la société Flexsys)
(5) Disulfure de tétrabenzylthiurame ("Perkacit TBZTD" de la société Flexsys)
(6) Quantité totale d'accélérateurs
(7) Ratio massique entre la quantité d'accélérateur 2 sur la quantité totale d'accélérateur.

Tableau 2

| **Composition** | C1 | C2 | C3 | C4 | C5 | C6 | C7 | C8 | C9 | C10 | C11 | C12 | C13 |
|---|---|---|---|---|---|---|---|---|---|---|---|---|---|
| **Propriétés de cuisson (140°C)** | | | | | | | | | | | | | |
| Vitesse K ($min^{-1}$) | 0.08 | 0.07 | 0.05 | 0.09 | 0.11 | 0.11 | 0.11 | 0.12 | 0.09 | 0.09 | 0.11 | 0.09 | 0.07 |
| Ti (min) | 14 | 13 | 9 | 12 | 11 | 11 | 10 | 10 | 12 | 12 | 8 | 8 | 8 |
| T95 (min) | 50 | 55 | 65 | 47 | 40 | 38 | 36 | 35 | 44 | 44 | 36 | 41 | 49 |
| **Propriétés à cuit** | | | | | | | | | | | | | |
| Traction à 60°C | | | | | | | | | | | | | |
| Allongement rupture (%) | 756 | 421 | 449 | 527 | 641 | 608 | 565 | 563 | 557 | 671 | 441 | 367 | 318 |
| Contrainte rupture (MPa) | 21 | 15 | 17 | 18 | 17 | 16 | 15 | 16 | 16 | 17 | 13 | 11 | 10 |
| Déchirabilité à 100°C | | | | | | | | | | | | | |
| Allongement rupture(%) | 316 | 58 | 70 | 98 | 206 | 159 | 126 | 95 | 116 | 306 | 67 | 48 | 50 |
| Force (N/mm) | 31 | 14 | 14 | 16 | 23 | 18 | 16 | 14 | 17 | 31 | 13 | 11 | 12 |

## Revendications

1. Composition de caoutchouc à base au moins d'un élastomère diénique fortement saturé, d'un noir de carbone et d'un système de vulcanisation comprenant du soufre et un accélérateur de vulcanisation,

   - l'élastomère diénique fortement saturé étant un copolymère d'éthylène et d'un 1,3-diène contenant des unités éthylène qui représentent au moins 50% en mole des unités monomères du copolymère,
   - le taux de l'élastomère diénique fortement saturé dans la composition de caoutchouc étant d'au moins 50 pce,
   - l'accélérateur de vulcanisation étant un mélange d'un accélérateur primaire et d'un accélérateur secondaire,
   - le ratio massique entre la quantité de l'accélérateur secondaire et la quantité totale d'accélérateurs est inférieur à 0.7, la quantité totale d'accélérateurs étant la somme de la quantité massique de l'accélérateur primaire et de la quantité massique de l'accélérateur secondaire dans la composition de caoutchouc,
   - le ratio massique étant calculé à partir des quantités exprimées en pce
   - l'accélérateur primaire étant une sulfénamide,
   - l'accélérateur secondaire étant un disulfure de thiurame.

2. Composition de caoutchouc selon la revendication 1 dans laquelle l'accélérateur primaire est la N-cyclohexyl-2-benzothiazyle sulfénamide.

3. Composition de caoutchouc selon l'une quelconque des revendications 1 à 2 dans laquelle l'accélérateur secondaire est le disulfure de tétrabenzylthiurame.

4. Composition de caoutchouc selon l'une quelconque des revendications 1 à 3 dans laquelle le ratio massique entre la quantité de l'accélérateur secondaire et la quantité totale d'accélérateurs est supérieur à 0.05, de préférence compris entre 0.05 et 0.7.

5. Composition de caoutchouc selon l'une quelconque des revendications 1 à 4 dans laquelle le ratio massique entre la quantité de l'accélérateur secondaire et la quantité totale d'accélérateurs est inférieur à 0.5, préférentiellement inférieur ou égal à 0.3.

6. Composition de caoutchouc selon l'une quelconque des revendications 1 à 5 dans laquelle le taux de soufre est inférieur à 1 pce, de préférence compris entre 0.3 pce et 1 pce.

7. Composition de caoutchouc selon l'une quelconque des revendications 1 à 6 dans laquelle le taux de soufre est inférieur à 0.95 pce, de préférence compris entre 0.3 pce et 0.95 pce.

8. Composition de caoutchouc selon l'une quelconque des revendications 1 à 7 dans laquelle le taux de soufre est inférieur à 0.8 pce, de préférence compris entre 0.3 pce et 0.8 pce.

9. Composition de caoutchouc selon l'une quelconque des revendications 1 à 8 dans laquelle le rapport massique entre le taux de soufre et la quantité totale d'accélérateurs est inférieur à 1, le rapport massique étant calculé à partir des taux et quantité exprimés en pce.

10. Composition de caoutchouc selon l'une quelconque des revendications 1 à 9 dans laquelle le rapport massique entre le taux de soufre et la quantité totale d'accélérateurs est inférieur ou égal à 0.7, de préférence inférieur à 0.6, le rapport massique étant calculé à partir des taux et quantité exprimés en pce.

11. Composition de caoutchouc selon l'une quelconque des revendications 1 à 10 dans laquelle le 1,3-diène est le 1,3-butadiène.

12. Composition de caoutchouc selon l'une quelconque des revendications 1 à 11 dans laquelle l'élastomère diénique fortement saturé comprend au moins 65% molaire d'unité éthylène, de préférence de 65% à 90% molaire d'unité éthylène.

13. Composition de caoutchouc selon l'une quelconque des revendications 1 à 12 dans laquelle le taux de l'élastomère diénique fortement saturé dans la composition de caoutchouc varie dans un domaine allant de 80 à 100 pce, de préférence de 90 à 100 pce.

**14.** Composition de caoutchouc selon l'une quelconque des revendications 1 à 13 dans laquelle le taux de noir de carbone est compris entre 25 pce et 65 pce.

**15.** Pneumatique qui comprend une composition de caoutchouc définie à l'une quelconque des revendications 1 à 14, de préférence dans sa bande de roulement.

**Patentansprüche**

**1.** Kautschukzusammensetzung auf Basis von mindestens einem hochgesättigten Dienelastomer, einem Ruß und einem Vulkanisationssystem, das Schwefel und einen Vulkanisationsbeschleuniger umfasst,

- wobei es sich bei dem hochgesättigten Dienelastomer um ein Copolymer von Ethylen und einem 1,3-Dien handelt, das Ethyleneinheiten enthält, die mehr als 50 Mol-% Monomereinheiten des Copolymers ausmachen,
- wobei der Gehalt an hochgesättigtem Dienelastomer in der Kautschukzusammensetzung mindestens 50 phe beträgt,
- wobei es sich bei dem Vulkanisationsbeschleuniger um eine Mischung eines primären Beschleunigers und eines sekundären Beschleunigers handelt,
- wobei das Massenverhältnis zwischen der Menge an sekundärem Beschleuniger und der Gesamtmenge an Beschleunigern kleiner als 0,7 ist, wobei die Gesamtmenge an Beschleunigern die Summe der Massenmenge an primärem Beschleuniger und der Massenmenge an sekundärem Beschleuniger in der Kautschukzusammensetzung ist,
- wobei das Massenverhältnis aus dem in phe ausgedrückten Mengen berechnet wird,
- wobei es sich bei dem primären Beschleuniger um ein Sulfenamid handelt,
- wobei es sich bei dem sekundären Beschleuniger um ein Thiuramdisulfid handelt.

**2.** Kautschukzusammensetzung nach Anspruch 1, wobei es sich bei dem primären Beschleuniger um N-Cyclohexyl-2-benzothiazylsulfenamid handelt.

**3.** Kautschukzusammensetzung nach einem der Ansprüche 1 bis 2, wobei es sich bei dem sekundären Beschleuniger um Tetrabenzylthiuramdisulfid handelt.

**4.** Kautschukzusammensetzung nach einem der Ansprüche 1 bis 3, wobei das Massenverhältnis zwischen der Menge an sekundärem Beschleuniger und der Gesamtmenge an Beschleunigern größer als 0,05 ist und vorzugsweise zwischen 0,05 und 0,7 liegt.

**5.** Kautschukzusammensetzung nach einem der Ansprüche 1 bis 4, wobei das Massenverhältnis zwischen der Menge an sekundärem Beschleuniger und der Gesamtmenge an Beschleunigern kleiner als 0,5 und vorzugsweise kleiner oder gleich 0,3 ist.

**6.** Kautschukzusammensetzung nach einem der Ansprüche 1 bis 5, wobei der Schwefelgehalt kleiner als 1 phe ist und vorzugsweise zwischen 0,3 phe und 1 phe liegt.

**7.** Kautschukzusammensetzung nach einem der Ansprüche 1 bis 6, wobei der Schwefelgehalt kleiner als 0,95 phe ist und vorzugsweise zwischen 0,3 phe und 0,95 phe liegt.

**8.** Kautschukzusammensetzung nach einem der Ansprüche 1 bis 7, wobei der Schwefelgehalt kleiner als 0,8 phe ist und vorzugsweise zwischen 0,3 phe und 0,8 phe liegt.

**9.** Kautschukzusammensetzung nach einem der Ansprüche 1 bis 8, wobei das Massenverhältnis zwischen dem Gehalt an Schwefel und der Gesamtmenge an Beschleunigern kleiner als 1 ist, wobei das Massenverhältnis aus dem in phe ausgedrückten Gehalt und der in phe ausgedrückten Menge berechnet wird.

**10.** Kautschukzusammensetzung nach einem der Ansprüche 1 bis 9, wobei das Massenverhältnis zwischen dem Gehalt an Schwefel und der Gesamtmenge an Beschleunigern kleiner oder gleich 0,7 und vorzugsweise kleiner als 0,6 ist, wobei das Massenverhältnis aus dem in phe ausgedrückten Gehalt und der in phe ausgedrückten Menge berechnet wird.

**11.** Kautschukzusammensetzung nach einem der Ansprüche 1 bis 10, wobei es sich bei dem 1,3-Dien um 1,3-Butadien handelt.

**12.** Kautschukzusammensetzung nach einem der Ansprüche 1 bis 11, wobei das hochgesättigte Dienelastomer mindestens 65 Mol-% Ethyleneinheiten und vorzugsweise 65 bis 90 Mol-% Ethyleneinheiten umfasst.

**13.** Kautschukzusammensetzung nach einem der Ansprüche 1 bis 12, wobei der Gehalt an hochgesättigtem Dienelastomer in der Kautschukzusammensetzung in einem Bereich von 80 bis 100 phe und vorzugsweise von 90 bis 100 phe variiert.

**14.** Kautschukzusammensetzung nach einem der Ansprüche 1 bis 13, wobei der Gehalt an Ruß zwischen 25 phe und 65 phe liegt.

**15.** Reifen, der eine Kautschukzusammensetzung gemäß einem der Ansprüche 1 bis 14 umfasst, vorzugsweise in seiner Lauffläche.

## Claims

**1.** Rubber composition based at least on a highly saturated diene elastomer, a carbon black and a vulcanizing system comprising sulfur and a vulcanization accelerator,

- the highly saturated diene elastomer being a copolymer of ethylene and of a 1,3-diene containing ethylene units which represent at least 50 mol% of the monomer units of the copolymer,
- the content of the highly saturated diene elastomer in the rubber composition being at least 50 phr,
- the vulcanization accelerator being a mixture of a primary accelerator and of a secondary accelerator,
- the mass ratio between the amount of secondary accelerator and the total amount of accelerators is less than 0.7, the total amount of accelerators being the sum of the mass amount of the primary accelerator and of the mass amount of the secondary accelerator in the rubber composition,
- the mass ratio being calculated from the amounts expressed in phr,

the primary accelerator being a sulfenamide,
the secondary accelerator being a thiuram disulfide.

**2.** Rubber composition according to Claim 1, in which the primary accelerator is N-cyclohexyl-2-benzothiazylsulfenamide.

**3.** Rubber composition according to either of Claims 1 and 2, in which the secondary accelerator is tetrabenzylthiuram disulfide.

**4.** Rubber composition according to any one of Claims 1 to 3, in which the mass ratio between the amount of secondary accelerator and the total amount of accelerators is greater than 0.05, preferably between 0.05 and 0.7.

**5.** Rubber composition according to any one of Claims 1 to 4, in which the mass ratio between the amount of secondary accelerator and the total amount of accelerators is less than 0.5, preferentially less than or equal to 0.3.

**6.** Rubber composition according to any one of Claims 1 to 5, in which the sulfur content is less than 1 phr, preferably between 0.3 phr and 1 phr.

**7.** Rubber composition according to any one of Claims 1 to 6, in which the sulfur content is less than 0.95 phr, preferably between 0.3 phr and 0.95 phr.

**8.** Rubber composition according to any one of Claims 1 to 7, in which the sulfur content is less than 0.8 phr, preferably between 0.3 phr and 0.8 phr.

**9.** Rubber composition according to any one of Claims 1 to 8, in which the mass ratio between the sulfur content and the total amount of accelerators is less than 1, the mass ratio being calculated from the contents and amount expressed in phr.

**10.** Rubber composition according to any one of Claims 1 to 9, in which the mass ratio between the sulfur content and the total amount of accelerators is less than or equal to 0.7, preferably less than 0.6, the mass ratio being calculated from the contents and amount expressed in phr.

**11.** Rubber composition according to any one of Claims 1 to 10, in which the 1,3-diene is 1,3-butadiene.

**12.** Rubber composition according to any one of Claims 1 to 11, in which the highly saturated diene elastomer comprises at least 65 mol% of ethylene units, preferably from 65 mol% to 90 mol% of ethylene units.

**13.** Rubber composition according to any one of Claims 1 to 12, in which the content of highly saturated diene elastomer in the rubber composition varies within a range extending from 80 to 100 phr, preferably from 90 to 100 phr.

**14.** Rubber composition according to any one of Claims 1 to 13, in which the carbon black content is between 25 phr and 65 phr.

**15.** Tyre which comprises a rubber composition defined in any one of Claims 1 to 14, preferably in its tread.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 9846954 B2
- WO 2014114607 A1
- EP 1092731 A
- WO 2004035639 A
- WO 2007054223 A
- WO 2007054224 A
- WO 2017093654 A1
- WO 2018020122 A1
- WO 2018020123 A1